# FASCICULE DE BREVET EUROPEEN

(11) **EP 0 664 238 B1**
(45) Date de publication et mention de la délivrance du brevet: **01.04.1998**
(21) Numéro de dépôt: 95400128.5
(22) Date de dépôt: 23.01.1995
(51) Int. Cl.: B60N 2/24, B60N 2/06, B64D 11/06

(54) **Siège convertible et à encombrement variable, notamment pour avion**
Umbaubarer Sitz mit variablem Raumbedarf insbesondere für Flugzeug
Convertible seat with variable space requirement, in particular for aircraft

(30) Priorité: 21.01.1994 FR 9400674
(43) Date de publication de la demande: 26.07.1995
(73) Titulaire: SOCIETE INDUSTRIELLE ET COMMERCIALE DE MATERIEL AERONAUTIQUE (SICMA) SOCIETE ANONYME, F-36100 Issoudun (FR)
(72) Inventeur: Marechal, Robert René Lucien, F-75116 Paris (FR)
(74) Mandataire: Derambure, Christian

(56) Documents cités:
- EP-A- 0 331 241
- WO-A-90/11930
- US-A- 3 637 253
- US-A- 3 893 729
- US-A- 4 834 452

## Description

L'invention concerne un siège convertible et à encombrement transversal variable et une structure convertible et à encombrement variable comprenant de tels sièges.

L'invention concerne en particulier un tel siège et une telle structure destinée à des appareils de transport en commun notamment avions de ligne.

Actuellement, les compagnies aériennes ont besoin de pouvoir adapter la cabine passagers d'un même appareil en fonction du taux de remplissage dans les différentes classes de confort et de tarif.

Dans ce but, les constructeurs de sièges d'avions ont développé des sièges et des structures convertibles et à encombrement variable permettant de modifier à la fois la taille des sièges et l'encombrement général de la structure à plusieurs sièges.

Les documents EP-A-0 530 923, EP-A-0 322 930, EP-A-0 443 664 et EP-A-0 530 920 concernent ce type de sièges et structures convertibles.

Ces structures ou sièges convertibles à encombrement variable font classiquement partie de deux catégories, à savoir :
- une première catégorie où pour passer d'une classe de confort à une autre, un certain nombre de sièges sont sacrifiés de manière à élargir les sièges restants. Par exemple une structure à trois sièges de classe économique sera transformée en une structure à deux sièges de confort supérieur, en sacrifiant le siège central. Cela permet d'élargir les deux sièges latéraux de la structure. D'une manière générale dans cette catégorie la structure complète à deux sièges élargis est moins encombrante que la structure à trois sièges d'un confort inférieur ;
- la deuxième catégorie concerne les structures comprenant un certain nombre de sièges ayant une largeur de confort donnée dans laquelle on fait varier l'espace inter-sièges et la position des accoudoirs de manière à donner l'impression d'un confort supplémentaire sans pour autant élargir le dossier ou l'assise du siège.

Citons également les documents suivants.

Le document US-A-3 637 253 décrit un siège pour automobile avec une section de base fixe, une section de dossier centrale fixe et des sections de dossier télescopiques aux extrémités.

Le document WO-A-90/11930 décrit un siège d'avion convertible in situ, pour une utilisation en classes économiques et affaires.

Le but de l'invention est de réaliser un siège et une structure du type de la deuxième catégorie avec laquelle la largeur du dossier et/ou de l'assise varie en fonction de la qualité de confort choisie. Ce but est achévé grâce à un siège et une structure tels que définis dans les revendications indépendantes 1 et 10. D'autres caractéristiques de l'invention sont décrites dans les revendications dépendantes.

L'invention concerne un siège, notamment d'avion de ligne, convertible et à encombrement transversal variable, comprenant une assise délimitée transversalement par deux crosses latérales entre lesquelles est monté un dossier de siège ayant une face avant, une face arrière et deux chants latéraux. Des moyens de rallonge de dossier, des moyens d'association et de positionnement sont prévus pour monter les moyens de rallonge de part et d'autre du dossier en regard des chants latéraux, et positionner les moyens de rallonge entre une position rétractée correspondant à un encombrement minimal suivant l'axe d'encombrement et une position déployée correspondant à un encombrement maximal du siège suivant ledit axe d'encombrement.

L'invention concerne en outre une structure à plusieurs sièges adjacents, notamment d'avion de ligne, qui comporte au moins deux sièges tels qu'évoqués, et des moyens d'activation pour passer de l'une à l'autre des positions d'encombrement.

Un avantage de l'invention est de faire évoluer la largeur du dossier et/ou de l'assise en fonction de l'espace inter-bâtis existant entre deux sièges consécutifs d'une même structure.

D'autres avantages résultent de la description qui suit, en référence aux dessins annexés dans lesquels :
- la figure 1 est une représentation schématique partielle en coupe transversale d'un dossier avec flanc de rallonge en position rétractée selon l'invention ;
- la figure 2 est une représentation schématique de l'exemple de la figure 1, en position déployée selon l'invention ;

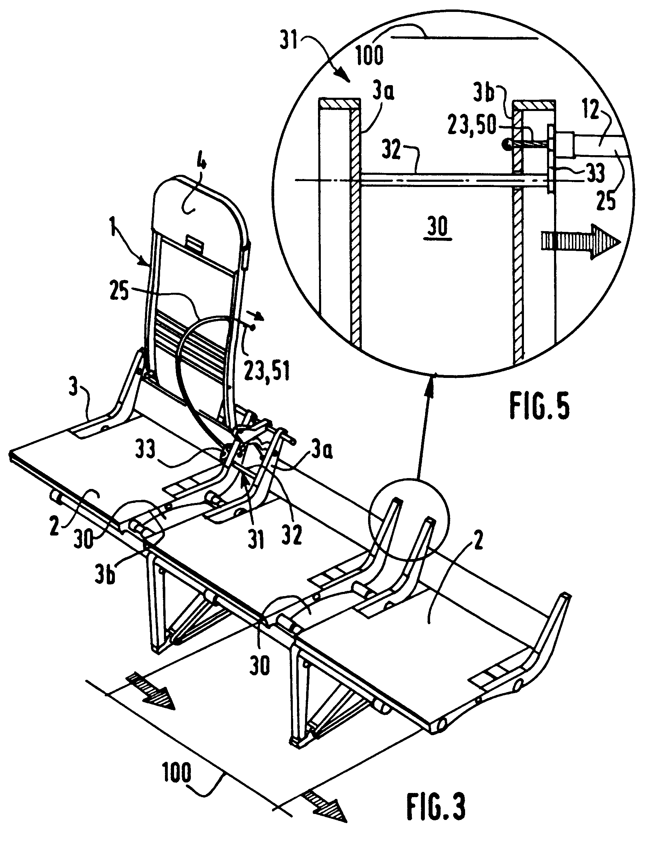

- la figure 3 est une représentation schématique partielle d'une structure en position d'encombrement maximal selon l'invention ;

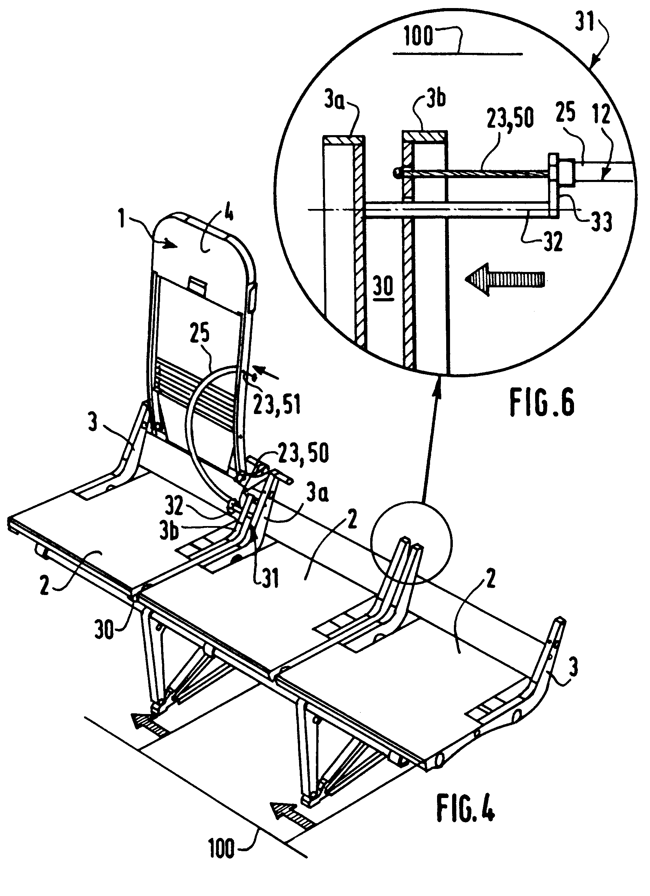

- la figure 4 est une représentation partielle schématique d'une structure en position d'encombrement minimal selon l'invention ;
- la figure 5 est une représentation schématique en coupe des moyens de couplage en position d'encombrement maximal selon l'invention ;
- la figure 6 est une représentation schématique en coupe des moyens de couplage selon l'invention en position d'encombrement minimal.

L'invention concerne un siège d'appareil de transport en commun, notamment d'avion de ligne, convertible et à encombrement variable. Ce siège comprend une assise 2 délimitée transversalement par deux crosses latérales 3 entre lesquelles est monté un dossier 4 de siège ayant une face avant 5, une face arrière 6 et deux chants latéraux 7.

A chacun des chants latéraux 7 sont associés par des moyens d'association et de positionnement 8 des moyens de rallonge 9. Ces moyens de rallonge 9 sont positionnés en regard des chants latéraux 7 du dossier 4. Ces moyens de rallonge 9 sont mobiles entre deux positions extrêmes à savoir :
- une position rétractée correspondant à une position d'encombrement minimal du siège suivant un axe d'encombrement 100 ; et
- une position déployée correspondant à une position d'encombrement maximal du siège suivant l'axe d'encombrement 100.

Les moyens d'association et de positionnement 8 comprennent des moyens d'articulation 10, pour associer de façon mobile les moyens de rallonge 9 au dossier 4, des moyens élastiques 11 forçant les moyens de rallonge 9 en position déployée, et des moyens de commande 12 ainsi que des moyens de blocage pour respectivement commander le déplacement et bloquer les moyens de rallonge 9 dans l'une ou l'autre des positions extrêmes rétractée ou déployée.

Selon l'invention, les moyens d'articulation 10 comprennent au moins une articulation à biellettes 13 ayant au moins une biellette 14 montée d'une part sur le dossier 4 à proximité du chant latéral 7 considéré, libre en rotation entre les deux positions extrêmes rétractée et déployée autour d'un premier axe de rotation 15 appartenant au dossier 4 et sensiblement perpendiculaire à l'axe d'encombrement 100.

D'autre part, la biellette 14 est montée sur les moyens de rallonge 9 associés, libre en rotation autour d'un deuxième axe de rotation 16 appartenant aux moyens de rallonge 9.

L'axe de rotation 16 est parallèle au premier axe 15.

Dans la réalisation représentée, les moyens de rallonge 9 comprennent deux flancs latéraux 9, chacun disposé le long d'un chant latéral 7 du dossier 4. Chaque flanc latéral 9 a en coupe transversale une forme générale en "U". Dans la position rétractée, une branche libre avant 17 de la forme en "U" vient en recouvrement partiel extérieur de la face avant 5 du dossier 4.

Toujours dans cette réalisation, les chants latéraux 7 du dossier 4 ont en coupe transversale une forme générale en "U". Dans la position rétractée, l'autre branche libre 18 de la forme en "U" des flancs latéraux 9, vient en recouvrement interne d'une branche libre arrière 19 de la forme en "U" des chants latéraux 7 du dossier 4.

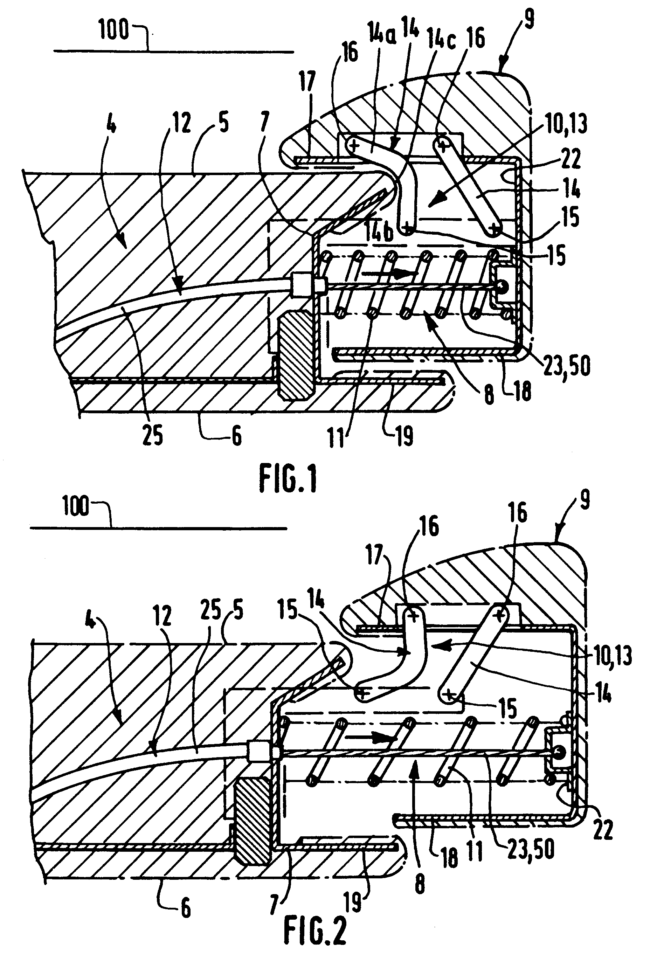

Dans ce mode de réalisation, les formes en "U" se font face, ouverture contre ouverture, et sont emboîtées l'une dans l'autre avec décalage comme cela est représenté sur la figure 1.

Dans cette même réalisation, les deuxièmes axes 16 des biellettes 14 des articulations à biellettes 13 sont portés par les branches libres avant 17 des flancs latéraux 9 en forme de "U". Les premiers axes 15 des biellettes 14 sont portés par un support d'axe solidaire des chants latéraux 7.

Sur les figures, les articulations 13 à biellettes comprennent deux biellettes 14 montées en parallèle.

Afin de rendre le mouvement entre les deux positions extrêmes le plus stable possible, il faut que la distance entre les axes de rotation du même type des biellettes soit la plus grande possible.

Dans ce but, selon la réalisation représentée, la biellette 14 la plus proche du chant latéral 7 a une forme générale en "L" de sorte qu'en position rétractée, la branche 14a de la biellette 14 en forme de "L" côté flanc latéral 9 vienne en recouvrement extérieur partiel de la face avant 5 du dossier 4. L'intersection 14c des branches de la biellette 14 vient en butée contre l'intersection de la face avant 5 du dossier 4 et du chant latéral 7 correspondant. Cette biellette en "L" permet de contourner l'intersection et ainsi d'avoir une distance inter-axes 15 et une distance inter-axes 16 plus importantes, tout en ayant un dispositif compact.

De façon non représentée, il existe des goupilles sur lesquelles les biellettes viennent en butée en position déployée.

Les moyens élastiques 11 forçant les flancs latéraux en forme de "U" 9 en position déployée comprennent au moins un ressort 11 pré-contraint en compression prenant appui sur le chant latéral 7 du dossier 4 et sur la branche de liaison du flanc latéral 9 en forme de "U".

Dans la réalisation des figures, le ressort 11 pré-contraint prend appui sur la branche de liaison 22 du chant latéral 7 en forme de "U".

Les moyens de commande permettant de passer de l'une à l'autre des positions extrêmes peut avantageusement comprendre un dispositif à câble 23 et à gaine 25.

Dans le mode de réalisation représenté sur les figures, le câble 23 est associé à la branche de liaison du flanc latéral en forme de "U", passe au travers du chant latéral 7 du dossier 4, de manière que lorsque l'on tire sur le câble on passe de la position déployée à la position rétractée. Lorsque l'on relâche le câble, on passe de la position rétractée à la position déployée.

Le mouvement de passage d'une position à l'autre est un mouvement de translation curviligne du flanc latéral suivant un arc de cercle, sans qu'il y ait rotation du flanc latéral 9 autour de lui-même du fait de la présence des doubles biellettes 14. Il n'y a donc pas modification de l'orientation du flan latéral 9 par rapport au plan du dossier 4 entre la position rétractée et la position déployée.

L'invention concerne aussi une structure à plusieurs sièges 1 adjacents dans les appareils de transport en commun, notamment d'avion de ligne, convertible et à encombrement variable suivant un axe de coulissement 100. Cette structure comprend une pluralité de sièges adjacents chacun écarté du suivant par un espace inter-bâtis 30. Chaque siège est mobile relativement aux autres suivant l'axe de coulissement 100 entre deux positions extrêmes à savoir une première position dite position d'encombrement maximal où l'espace inter-bâtis 30 est maximal et une deuxième position dite à encombrement minimal où l'espace inter-bâtis 30 est minimal. Cette structure comporte de façon connue des moyens d'activation pour passer de l'une à l'autre des positions d'encombrement.

Selon l'invention, cette structure comprend au moins deux sièges du type de celui décrit ci-dessus. En outre, cette structure comprend des moyens de couplage 31 pour coupler les moyens de commande 12 pour déplacer les flancs de rallonge latéraux 9 du ou des sièges et les moyens d'activation pour déplacer les sièges 1 entre l'une ou l'autre des positions d'encombrement. Ainsi, une seule manipulation, à savoir le passage de la structure en position d'encombrement maximal ou minimal, permet automatiquement de déplacer les flancs de rallonge latéraux 9 respectivement en position déployée ou en position rétractée.

Dans la réalisation des figures, les moyens de couplage comprennent une tige 32 d'axe parallèle à l'axe d'encombrement 100 solidaire de la crosse 3a d'un siège adjacent, montée à l'extérieure de la dite crosse 3a et dirigée vers la crosse 3b correspondant à un flanc latéral à manipuler.

La tige 32 passe au travers de la crosse 3b à travers laquelle elle peut coulisser facilement.

Ainsi, en fonction de l'espace inter-bâtis 30, c'est-à-dire de l'espace inter-crosses 3a 3b, la tige 32 est plus ou moins saillante de la partie interne de la crosse 3b.

Dans le mode de réalisation représenté, les moyens de commande 12 pour déplacer les flancs de rallonge latéraux 9 comprennent un dispositif à câble tel que :
- le câble 12 est associé au flanc de rallonge latéral 9, passe au travers du chant latéral 7, et est associé à la crosse transversale 3b ;
- le câble 23 est gainé entre le chant latéral 7 du dossier 4 et l'extrémité 33 de la tige 32.

Le fonctionnement est le suivant :

En partant d'une structure en position d'encombrement minimal, les flancs latéraux sont en position rétractée.

En agissant sur les moyens d'activation, on fait passer la structure de la position d'encombrement minimal à la position d'encombrement maximal. Cela a pour conséquence d'augmenter l'espace inter-bâtis 30. De ce fait, la tige 32 passe d'une position saillante maximale à une position saillante minimale de la face interne de la crosse 3b. Ainsi, la longueur 50 du câble 23 existante entre la crosse 3b et l'extrémité 33 de la tige 32 diminue, la conséquence étant que la longueur 51 de câble 23 comprise entre le chant latéral 7 du dossier 4 et le flanc latéral 9 s'agrandit. Le flanc latéral 9 soumis à la force du ressort 11 s'écarte donc du chant latéral 7. En position d'encombrement maximal de la structure, la longueur 50 de câble 23 est minimale et la longueur 51 de câble 23 est maximale permettant au flanc latéral 9 d'être en position déployée.

Inversement, lorsque l'on passe de la position d'encombrement maximal à la position d'encombrement minimal, on agit sur les moyens d'activation pour réduire l'espace inter-bâtis. De ce fait, la tige 32 saille de plus en plus de la face interne de la crosse 3b, la longueur 50 du câble 23 augmente, ce qui a pour conséquence de diminuer la longueur 51 du câble 23 et donc de ramener le chant latéral 9 en position rétractée.

## Revendications

1. Siège d'appareil de transport en commun tel qu'avion de ligne, convertible et à encombrement transversal variable, comprenant une assise (2) délimitée transversalement par deux crosses latérales (3) entre lesquelles est monté un dossier (4) de siège ayant une face avant (5), une face arrière (6) et deux chants latéraux (7), ce siège comprenant des moyens de rallonge (9) de dossier (4), des moyens d'association et de positionnement (8) pour monter les moyens de rallonge (9) de part et d'autre du dossier (4) en regard des chants latéraux (7), et positionner les moyens de rallonge (9) entre une position rétractée correspondant à un encombrement minimal du siège suivant l'axe d'encombrement (100) et une position déployée correspondant à un encombrement maximal, l'orientation des moyens de rallonge (9) par rapport au dossier (4) dans la position déployée étant sensiblement identique à leur orientation dans la position rétractée ; caractérisé en ce que les moyens d'association (8) comprennent des moyens d'articulation (10) pour associer de façon mobile les moyens de rallonge (9) au dossier (4), des moyens élastiques (11) forçant les moyens de rallonge (9) en position déployée, et des moyens de commande (12) ainsi que des moyens de blocage pour respectivement déplacer et bloquer les moyens de rallonge (9) dans l'une ou l'autre des positions extrêmes rétractée ou déployée, lesdits moyens d'articulation (10) comprenant une articulation (13) à biellettes (14) ayant au moins une biellette (14), dont une au moins (14) est montée d'une part sur le dossier (4) à proximité du chant latéral (7) considéré, libre en rotation entre les deux positions extrêmes rétractée et déployée autour d'un premier axe de rotation (15) appartenant au dossier (4) et sensiblement perpendiculaire à l'axe d'encombrement (100), et d'autre part sur les moyens de rallonge (9) associés, libre en rotation autour d'un deuxième axe de rotation (16) appartenant aux moyens de rallonge (9) et parallèle au premier axe (15).

2. Siège selon la revendication 1, caractérisé en ce que les moyens de rallonge (9) comprennent deux flancs latéraux (9) chacun disposé le long d'un chant latéral (7) du dossier (4), ayant en coupe transversale une forme générale en "U", telle que dans la position rétractée, la branche libre avant (17) de la forme en "U" vienne en recouvrement partiel extérieur de la face avant (5) du dossier (4).

3. Siège selon la revendication 2, caractérisé en ce que les chants latéraux (7) du dossier ont en coupe transversale une forme générale en "U", telle que dans la position rétractée, l'autre branche libre (18) de la forme en "U" des flancs latéraux (9) vient en recouvrement interne de la branche libre arrière (19) de la forme en "U" des chants latéraux (7) du dossier (4).

4. Siège selon la revendication 2 ou 3, caractérisé en ce que les biellettes (14) sont montées sur les branches libres avant (17) des flancs latéraux (9) en forme de "U" venant en recouvrement partiel extérieur de la face avant (5) du dossier (4).

5. Siège selon l'une des revendications 2 à 4, caractérisé en ce que les moyens élastiques (11) comprennent au moins un ressort en compression (11) prenant appui sur le chant latéral (7) du dossier (4) et sur la branche de liaison (21) du flanc latéral (9) en forme de "U" en regard.

6. Siège selon les revendications 3 et 5, caractérisé en ce que le ressort pré-contraint (11) prend appui sur la branche de liaison (22) du chant latéral (7) en forme de "U".

7. Siège selon l'une des revendications 1 à 6, caractérisé en ce que l'articulation (13) à biellettes comprend deux biellettes (14) montées en parallèle.

8. Siège selon l'une des revendications 1 à 7, caractérisé en ce que la biellette (14) la plus proche du chant latéral (7) a une forme générale en "L" de sorte qu'en position rétractée, la branche (14a) de cette biellette (14) vient en recouvrement extérieur partiel de la face avant (5) du dossier, l'intersection (14c) des branches (14a, 14b) de la biellette (14) venant en butée contre l'intersection de la face avant (5) du dossier (4) et du chant latéral (7) correspondant.

9. Siège selon l'une des revendications 1 à 8, caractérisé en ce que les moyens de commande (12) comprennent un dispositif à câble (23) et à gaine (25).

10. Structure à plusieurs sièges adjacents d'appareil de transport en commun, notamment d'avion de ligne, convertible et à encombrement transversal variable suivant un axe de coulissement (100) comprenant :
- une pluralité de sièges adjacents, chacun écarté du suivant par un espace inter-bâtis (30), chacun comprenant une assise (2) délimitée transversalement par deux crosses latérales (3, 3a, 3b) entre lesquels est monté un dossier de siège (4), chaque siège étant mobile relativement aux autres suivant l'axe de coulissement (100) entre deux positions extrêmes à savoir une première position dite d'encombrement maximal où l'espace inter-bâtis (30) est maximal, et une deuxième position dite d'encombrement minimal où l'espace inter-bâtis (30) est minimal, et
- des moyens d'activation pour passer de l'une à l'autre des positions d'encombrement,
caractérisée en ce qu'elle comprend au moins deux sièges (1) selon l'une des revendications 1 à 9.

11. Structure selon la revendication 10, caractérisée en ce qu'elle comprend des moyens de couplage (31) aptes à coupler les moyens de commande (12) de façon à déplacer les flancs de rallonge latéraux 9 des sièges et les moyens d'activation pour déplacer les sièges (1) entre l'une ou l'autre des positions d'encombrement, de sorte qu'une seule manipulation permet la réalisation des deux déplacements.

12. Structure selon la revendication 11, caractérisée en ce que les moyens de couplage (31) comprennent une tige (32) d'axe parallèle à l'axe d'encombrement (100) associée rigidement sur la face externe de la crosse (3a) du siège adjacent, dirigée vers la crosse (3b) du siège à coupler, traversant l'espace inter-bâtis (30), passant à travers et faisant saillie de la face interne de ladite crosse (3b) de siège à coupler, et d'extrémité libre (33) associée aux moyens de commande (12).

13. Structure selon la revendication 12, caractérisée en ce que les moyens de commande 12 d'un flanc de rallonge latéraux (9) comprennent un câble (23) associé au flanc (9) à l'une de ses extrémités et à la crosse (3b) associée à son autre extrémité, passant au travers du chant latéral (7) associé, et gainé par une gaine (25) de circulation du câble (23) disposée entre le chant latéral (7) et l'extrémité (33) de la tige (32).

## Claims

1. A seat for a public transport vehicle such as an airliner, the seat being convertible and of variable transverse bulk, comprising a seat proper (2) defined transversely by two side brackets (3) between which a seat back (4) is mounted, the back having a front face (5), a rear face (6), and two side edges (7), the seat including extending means (9) for the back (4), association and positioning means (8) for mounting the extending means (9) on either side of the back (4) facing the side edges (7) and for positioning the extending means (9) between a retracted position corresponding to a minimum along a bulk axis (100) and a deployed position corresponding to a maximum bulk, the orientation of the extending means (9) relative to the back (4) in the deployed position being substantially identical to their orientation in the retracted position; the seat being characterized in that the association means (8) comprise hinge means (10) for moveably associating the extending means (9) with the back (4), resilient means (11) forcing the extending means (9) into the deployed position, and control means (12) together with locking means respectively for displacing and for locking the extending means (9) in either of the retracted and deployed extreme positions, said hinge means (10) comprising a hinge (13) with rods (14), having at least one rod (14) at least one of which rods (14) is mounted on the one hand to the back (4) close to the side edge (7) under consideration, being free to rotate between the retracted and deployed extreme positions about a first axis of rotation (15) belonging to the back (4) and on the substantially perpendicular to the bulk axis (100), and on the other hand on the associated extending means (9) free to rotate about a second axis of rotation (16) belonging to the extending means (9) and parallel to the first axis (15).

2. A seat according to claim 1, characterized in that the extending means (9) comprise two side flanks (9) each disposed along a side edge (7) of the back (4), being generally U-shaped in transverse cross-section such that in the retracted position, the front free limb (17) of the U-shape partially overlaps the outside of the front face (5) of the back (4).

3. A seat according to claim 2, characterized in that the side edges (7) of the back are generally U-shaped in transverse cross-section such that in the retracted position, the other free limb (18) of the U-shape of the side flanks (9) overlaps the inside of the rear free limb (19) of the U-shape of the side edges (7) of the back (4).

4. A seat according to claim 2 or 3, characterized in that the rods (14) are mounted on the front free limbs (17) of the U-shaped side flanks (9) partially overlapping the outside of the front face (5) of the back (4).

5. A seat according to any one of claims 2 to 4, characterized in that the resilient means (11) comprise at least one compression spring (11) bearing against the side edge (7) of the back (4) and against the web limb (21) of the facing U-shaped side flank (9).

6. A seat according to claims 3 and 5, characterized in that the pre-stressed spring (11) bears against the web limb (22) of the U-shaped side edge (7).

7. A seat according to any one of claims 1 to 6, characterized in that the rod hinge (13) comprises two rods (14) mounted in parallel.

8. A seat according to any one of claims 1 to 7, characterized in that the rod (14) closest to the side edge (7) is generally L-shaped such that in the retracted position, the limb (14a) of said rod (14) partially overlaps the outside of the front face (5) of the back, the intersection (14c) of the limbs (14a, 14b) of the rod (14) coming into abutment against the intersection of the front face (5) of the back (4) and the corresponding side edge (7).

9. A seat according to any one of claims 1 to 8, characterized in that the control means (12) comprise a cable (23) and sheath (25) device.

10. A structure comprising a plurality of adjacent seats for a public transport vehicle, notably an airliner, the structure being convertible and of variable transverse bulk along a sliding axis (100) comprising:
ø a plurality of adjacent seats, each spaced apart from the next by an inter-frame space (30), each comprising a seat proper (2) defined transversely by two side brackets (3, 3a, 3b) between which a seat back (4) is mounted, each seat being movable relative to the others along the sliding axis (100) between two extreme positions, namely a first position of maximum bulk where the inter-frame space (30) is at a maximum and a second position of minimum bulk where the inter-frame space (30) is at a minimum; and
ø activation means for passing from either of the bulk positions to the other;
characterized in that it comprises at least two seats (1) according to any one of claims 1 to 9.

11. A structure according to claim 10, characterized in that it comprises coupling means (31) suitable for coupling the control means (12) so as to displace the flanks of side extensions (9) of the seats and activation means for moving the seats (1) from either of the bulk positions to the other such that a single handling operation enables both displacements to be performed.

12. A structure according to claim 11, characterized in that the coupling means (31) comprise a shank (32) of axis parallel to the bulk axis (100) rigidly associated with the outside face of the bracket (3a) of the adjacent seat, extending towards the bracket (3b) of the seat to be coupled, passing through the inter-frame space (30), passing through and projecting from the inside face of said bracket (3b) of the seat to be coupled, and having a free end (33) associated with the control means (12).

13. A structure according to claim 12, characterized in that the control means (12) for controlling a side extending flank (9) comprise a cable (23) associated with the flank (9) at one of its ends and with the associated bracket (3b) at its other end, passing through the associated side edge (7), and sheathed in a sheath (25) for allowing the cable (23) to move, disposed between the side edge (7) and the end (33) of the shank (32).

## Patentansprüche

1. Umbaubare Sitz mit in Querrichtung variablem Raumbedarf, insbesondere für Verkehrsflugzeuge, mit einer in Querrichtung durch zwei seitliche Traversen begrenzten Sitzfläche (2), zwischen denen eine Rückenlehne (4) mit einer Vorderseite (5), einer Rückseite (6) und zwei Seitenkanten (7) eingebaut ist, wobei der Sitz Mittel zur Verlängerung (9) der Rückenlehne (4) sowie Zuordnungs- und Positioniermittel (8) zum Einbauen der Verlängerungsmittel (9) auf jeder Seite der Rückenlehne (4) gegenüber den Seitenkanten (7) und Positionieren der Verlängerungsmittel (9) zwischen einer eingezogenen Position, die einem minimalen Raumbedarf des Sitzes in Richtung einer Raumbedarfachse (100) entspricht, und einer ausgezogenen Position, die einem maximalen Raumbedarf entspricht, besitzt, wobei die Ausrichtung der Verlängerungsmittel (9) aud die Rückenlehne (4) in ausgezogener Position weitgehend mit ihrer Ausrichtung in eingezogener Position übereinstimmt, **dadurch gekennzeichnet, daß** die Zuordnungsmittel (8) Schwenkmittel (10) zur beweglichen Zuordnung die Verlängerungsmittel (9) mit der Rückenlehne (4), weiterhin elastische Mittel (11), mit denen die Verlängerungsmittel (9) gezwungen werden, sich in die ausgezogene Stellung zu bewegen, sowie Steuerungsmittel (12) und Blockiermittel zum Bewegen bzw. Blockieren der Verlängerungsmittel (9) in eingezogener bzw. ausgezogener Endposition besitzen, wobei die Schwenkmittel (10) mindestens eine Schwenkvorrichtung (13) mit mindestens einem Schwingarm (14) besitzen, von denen zumindest einer (14) einerseits an der Rückenlehne (4) in der Nähe der entsprechenden Seitenkante (7) montiert ist und frei um eine erste, zur Rückenlehne (4) gehörende und weitgehend senkrecht zur Raumbedarfachse (100) verlaufende Drehachse (15) zwischen den beiden eingezogenen und ausgezogenen Endstellungen drehbar ist, während andererseits der Schwingarm (14) an den entsprechenden Verlängerungsmitteln (9) montiert ist und frei um eine zweite, zu den Verlängerungsmitteln (9) gehörende, parallel zur ersten Achse (15) verlaufenden Schwenkachse (16) drehbar ist.

2. Sitz nach Patentanspruch 1, dadurch gekennzeichnet, daß die Verlängerungsmittel (9) zwei Seitenflanken (9) besitzen, die jeweils entlang einer Seitenkante (7) der Rückenlehne (4) Verlaufen, wobei jede Seitenflanke insgesamt im Querschnitt die Form eines "U" hat, so dass der freie vordere Schenkel (17) des U-Profils in eingezogener Position teilweise und aussen die Vorderseite (5) der Rückenlehne (4) überdeckt.

3. Sitz nach Patentanspruch 2, dadurch gekennzeichnet, daß die Seitenkanten (7) der Rückenlehne (4) insgesamt im Querschnitt die Form eines "U" haben, so dass der andere freie Schenkel (18) des U-Profils der Seitenflanken (9) in der eingezogenen Position im Inneren den freien hinteren Schenkel (19) des U-Profils der Seitenkanten (7) der Rückenlehne (4) überdeckt.

4. Sitz nach Patentanspruch 2 oder 3, dadurch gekennzeichnet, daß die Schwingarme (14) auf den freien vorderen Schenkeln (17) der Seitenflanken (9) mit U-Profil montiert sind, die teilweise aussen die Vorderseite (5) der Rückenlehne (4) überdecken.

5. Sitz nach einem der Patentansprüche 2 bis 4, dadurch gekennzeichnet, daß die elastischen Mittel (11) zumindest eine vorgespannte Druckfeder (11) besitzen, die einerseits auf der Seitenkante (7) der Rückenlehne (4) und andererseits auf dem Verbindungsschenkel (21) der U-förmigen Seitenflanke (9) aufliegt.

6. Sitz nach den Patentansprüchen 3 und 5, dadurch gekennzeichnet, daß die vorgespannte Feder (11) auf dem Verbindungsschenkel (22) der U-förmigen Seitenkante (7) aufliegt.

7. Sitz nach einem der Patentansprüche 1 bis 6, dadurch gekennzeichnet, daß die Schwenkvorrichtung (13) zwei parallel zueinander angebrachten Schwingarmen (14) besitzt.

8. Sitz nach einem der Patentansprüche 1 bis 7, dadurch gekennzeichnet, daß der am nächsten bei der Seitenkante (7) befindliche Schwingarm (14) insgesamt die Form eines "L" besitzt, sodaß bei eingezogener Position der Schenkel (14a) dieses Schwingarms (14) außen teilweise die Vorderseite (5) der Rückenlehne (4) überdeckt, wobei der Schnittpunkt (14c) der Schenkel (14a,14b) des Schwingarms (14) am Schnittpunkt zwischen der Vorderseite (5) der Rückenlehne (4) und der entsprechenden Seitenkante (7) anliegt.

9. Sitz nach einem der Patentansprüche 1 bis 8, dadurch gekennzeichnet, daß die Steuerungsmittel (12) eine Vorrichtung mit Drahtseil (23) und Hülle (25) besitzen.

10. Struktur mit mehreren in einem öffentlichen Verkehrsmittel, insbesondere einem Verkehrsflugzeug nebeneinander angeordneten, umbaubaren Sitzen mit variablem Raumbedarf in Richtung einer Verschiebungachse (100) mit
- einer Mehrzahl von nebeneinander und in einem bestimmten Zwischenabstand (30) voneinander angeordneten Sitzen, von denen jeder eine Sitzfläche (2) besitzt, die in Querrichtung durch zwei seitliche Traversen (3, 3a, 3b) begrenzt ist, zwischen denen eine Rückenlehne (4) eingebaut ist, wobei jeder Sitz in Bezug auf die anderen auf der Querachse (100) zwischen zwei Endpositionen verstellbar ist, nämlich einer ersten Position mit maximalem Raumbedarf, bei der der Zwischenabstand (30) am größten ist, und einer zweiten Position mit minimalem Raumbedarf, bei der der Zwischenabstand (30) am geringsten ist, und
- Betätigungsmitteln, mit denen von einer Position in die andere übergewechselt werden kann,
dadurch gekennzeichnet, daß sie mindestens zwei Sitze nach einem der Patentansprüche 1 bis 9 besitzt.

11. Struktur nach Patentanspruch 10, dadurch gekennzeichnet, daß sie Koppelmittel (31) zum Koppeln der Steuerungsmittel (12) zur Verlagerung der Seitenverlängerungsflanken (9) der Sitze sowie Betätigungsmittel zum Verlagern der Sitze (1) zwischen der einen und der anderen Position besitzt, sodaß die beiden Verlagerungen mit einer einzigen Handhabung erfolgen können.

12. Struktur nach Patentanspruch 11, dadurch gekennzeichnet, daß die Koppelmittel (31) eine parallel zur Raumbedarfachse (100) ausgerichtete und fest auf der Traverse (3a) eines Sitzes zugeordnete Stange (32) besitzen, die zur Traverse (3b) des zu koppelnden Sitzes hin ausgerichtet ist, durch den Zwischenabstand (30) verläuft, die Innenseite der Traverse (3b) des zu koppelnden Sitzes durchläuft und auf dieser Innenseite herausragt, wobei das freie Ende (33) der Stange den Steuerungsmitteln (12) zugeordnet ist.

13. Struktur nach Patentanspruch 12, dadurch gekennzeichnet, daß die Steuerungsmittel (12) für eine Seitenverlängerungsflanke (9) ein Drahtseil (23) besitzen, das an dem einen Ende der Flanke (9) und am anderen Ende der Traverse (3b) zugeordnet ist, das durch die entsprechende Seitenkante (7) verläuft sowie in einer Hülle (25) umgehüllt ist, die zwischen der Seitenkante (7) und dem Ende (33) der Stange (32) angeordnet ist.
